# EUROPEAN PATENT SPECIFICATION

(11) **EP 0 840 417 B1**
(45) Date of publication and mention of the grant of the patent: **03.01.2007**
(21) Application number: 97308201.9
(22) Date of filing: 16.10.1997
(51) Int. Cl.: H02G 3/06

(54) **Connector fitting for trunking and the like**
Anschlussstück für Kabelkanal und dergleichen
Raccord de connexion pour conduit et analogue

(30) Priority: 29.10.1996 GB 9622491
(43) Date of publication of application: 06.05.1998
(73) Proprietor: Electrix International Limited, Bishop Auckland, County Durham DL14 6XP (GB)
(72) Inventor: Thompson, Malcolm, Weardale, Co Durham, DL13 3HE (GB); Thompson, William Barry, Weardale, Co Durham, DL13 3HE (GB)
(74) Representative: Vinsome, Rex Martin

(56) References cited:
- DE-A- 4 306 385
- DE-U- 7 420 794
- US-A- 5 469 893

## Description

The present invention is concerned with a connector fitting forming a component of a trunking or like system. It will be described and illustrated by reference to trunking but may also be a component of other types of generally elongate systems by means of which materials are enclosed or conveyed.

Connectors of this type are used when it is required to change the direction of a line of trunking, usually within a given generally horizontal plane, for example by a right angle or by an angle which is larger or smaller than this, or to provide an intersection such as a "tee" interconnection between trunking lengths. Such connectors are conventionally formed with short, straight, parallel-sided sections where they are to be coupled to adjacent trunking lengths. A lid is provided which covers the open top of the connector up to the point of join with the adjacent trunking straight section. In an alternative available form of a trunking connector, the short parallel-sided sections of the connector are dispensed with and the adjacent trunking straight section is linked direct to the body of the connector by means of tabs formed on the connector or by an internal coupling.

While connectors of these known types are generally acceptable for many purposes, they are less than satisfactory for use in certain installations where a high standard of hygiene and cleanliness is demanded, for example in the food, pharmaceutical and brewery industries. The joints formed between the connector and the adjacent trunking sections are potential collectors of dirt or infestation and are not easily cleaned.

An example of a trunking connector of the prior art is disclosed in US 5469893.

It is an object of the present invention to provide an improved connector fitting by means of which this major problem may be reduced or overcome.

According to the present invention there is provided a trunking fitting comprising an open connector having a flat base and upright sides extending between at least two generally rectangular openings, defined by the end edges of said flat base and upright sides, wherein said openings lie in mutually inclined planes, the upright sides which together with the base define said at least two openings being nor parallel to each other, and a lid adapted to close the connector and characterised in that said lid is adapted to extend extend beyond the generally rectangular openings.

Because the lid is designed to close the open top of the connector, the lid itself also has non-parallel sides. The lid extensions overlie the nearer ends of the adjacent trunking lengths and thus cover the joints between the connector and those lengths and thereby prevent or discourage the incursion of dirt or infestation at the joints.

The connector fitting according to the present invention may be formed with just two openings, for example in planes at mutual right angles or at some other acute or preferably obtuse angle to each other. As an alternative, the fitting may have three openings and thereby enable a T-junction to be formed in the trunking, or may have four openings and form an intersection or X-junction.

The lid which closes the connector fitting is preferably a close fit and may be simply a push-on or clip-on fit or may be retained in place by some feature such as a projection or clip on its inner face. It preferably has a peripheral, downwardly extending flange along those sides which correspond to the upright sides of the fitting. The extensions of the lid beyond the two or more openings may be formed a little above the plane of the lid itself, and optionally formed a little wider than the openings, to enable these extensions to overlie the ends of the adjacent trunking lengths and/or lids fitted upon those lengths. Any such transitions between the main plane of the lid and the lid extensions are preferably smooth transitions, for example shallow gradients, to make cleaning in those areas as easy as possible.

The lid is preferably formed from a single piece of material, for example by pressing and/or moulding. The sides and base of the body of the connector fitting are either formed from one single piece of sheet material or are fully welded to produce a watertight construction except at the specified openings.

Both the body of the connector fitting and the lid are preferably formed of metal, in particular of steel and most preferably of stainless steel.

Preferably a gasket is provided for inclusion between the lid and its extensions in the one hand and the body of the trunking and adjacent lids on the other, to assist in excluding dust and other solid and liquid contaminants from the interior of the trunking.

Connection of the connector fitting to the adjacent trunking lengths is best assisted by providing some form of coupling. Such a coupling, which may for example be of slightly smaller dimensions than the trunking and be therefore able to fit within the joints, may be welded or otherwise retained in place within the connector fitting of the present invention and attachable by bolts or similar means to the adjacent lengths of trunking. In one form of the present invention, the couplings may be of the type disclosed in co-pending United Kingdom Patent Application No. 9614752.5.

The invention will now be further described with reference to the accompanying drawings, which illustrate, by way of example only, two preferred forms of the trunking connector fitting according to the present invention and wherein:-
- Fig.1: is an exploded perspective view of a right angled bend; and
- Fig.2: is an exploded perspective view of a tee-fitting.

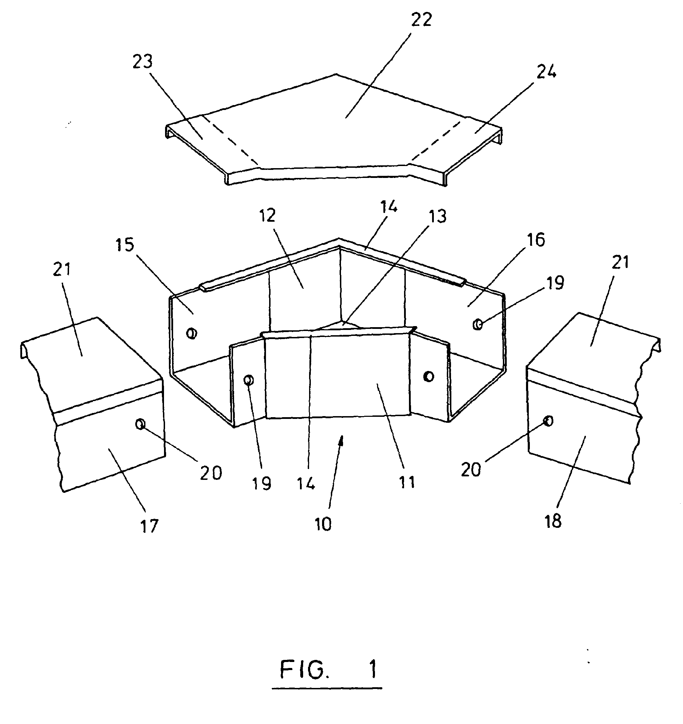

Referring firstly to Fig.1, the connector fitting there illustrated is an open bend 10 of which the opposite sides 11 and 12 are formed by bending upwardly from a single piece of stainless steel which also forms the base 13 of the fitting. Flanges 14 are formed along the upper edges of the sides. Secured by welding within the rectangular openings at the ends of the fitting are two couplings 15, 16, each of a section corresponding closely to that of the opening. The couplings 15, 16 are of such dimensions as to be a close fit within adjacent lengths of straight trunking, 17 and 18 respectively, and may be secured in place therein by bolts (not shown) passed through mating holes 19, 20. Each straight length 17, 18 is closed off by a lid 21.

When the trunking straights 17, 18 have been secured to the connector fitting by means of the couplings in this way, a lid 22 is fitted over the connector 10. Extensions 23, 24 are slightly displaced upwardly relative to the plane of the lid 22 and are of such width that they form a close fit over the ends of the lids 21. Gaskets (not shown) are sandwiched between the lid 22 and the lids 21 to assist in preserving the integrity of the joint in the trunking.

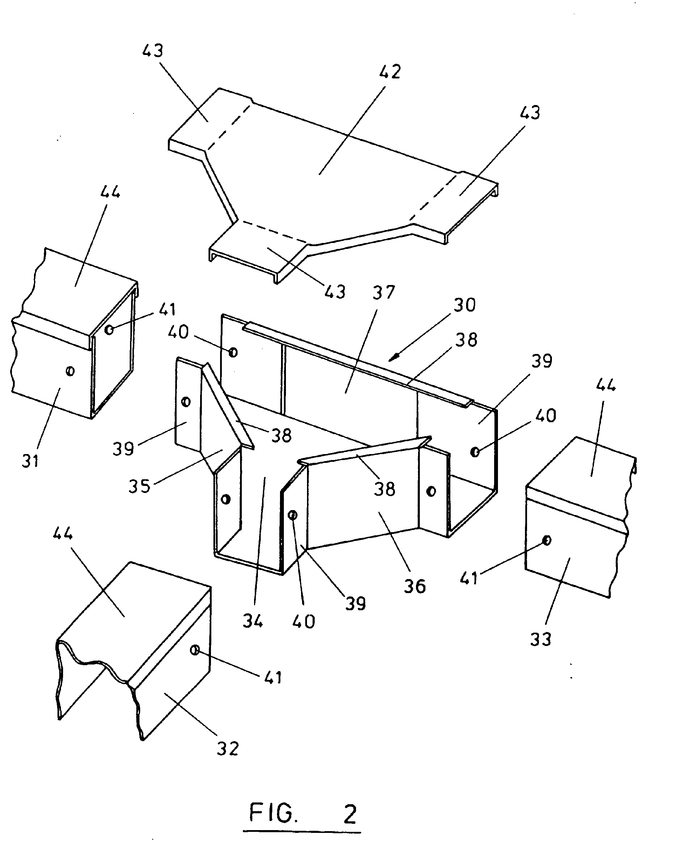

Turning now to Fig.2, the connector 30 shown in that figure is devised to enable a tee-junction to be formed among three straight lengths of trunking 31, 32 and 33. The base 34 of the fitting and the side-walls 35, 36, 37 are formed by folding from a single piece of stainless steel. Flanges 38 are formed along the top edges of these side-walls.

Located within the three rectangular apertures defined by the side-walls are three couplings 39, each coupling being welded in place and being so dimensioned as to be a close fit within the end of one of the trunking straights 31, 32, 33. The couplings are secured in place within these straight sections by bolts (not shown) passing through holes 40, 41.

The lid 42 for the three-way connector 30 is generally flat but has raised and widened extensions 43 which, when the lid is in position, overlie the joints formed with the straights 31, 32, 33 and cover the adjacent ends of lids 44 by which the straights are closed. Gaskets (not shown) are interposed between the lid 42 and the lids 44.

## Claims

1. A trunking fitting comprising an open connector (10)having a flat base (13) and upright sides (11, 12)extending between at least two generally rectangular openings, defined by the end edges of said flat base (13) and upright sides (11, 12) wherein said openings lie in mutually inclined planes, the upright sides (11, 12) which together with the base (13) define said at least two openings being not parallel to each other, and a lid (22), adapted to close the connector (10) and **characterised in that** said lid is adapted to (22) extend beyond the generally rectangular openings.

2. A fitting according to claim 1, wherein the lid (22) is a close fit.

3. A fitting according to claim 2, wherein the lid (22) is a push-on or clip-on fit or is retained in place by some feature such as a projection or clip on its inner face.

4. A fitting according to claim 2 or 3, wherein the lid has a peripheral, downwardly extending flange along those sides which correspond to the upright sides (11, 12) of the fitting.

5. A fitting according to any one of the preceding claims, wherein the extensions (24) of the lid (22) beyond the two or more openings are formed a little above the plane of the lid (22) itself.

6. A fitting according to claim 5, wherein the extensions (24) of the lid (22) are formed a little wider than the openings.

7. A fitting according to any one of the preceding claims, wherein any transitions between the main plane of the lid (22) and the lid extensions (24) are smooth transitions.

8. A fitting according to any one of the preceding claims, wherein the lid (22) is formed from a single piece of material.

9. A fitting according to any one of the preceding claims, wherein both the body of the connector fitting (10)and the lid (22) are formed of metal.

10. A fitting according to any one of the preceding claims, further comprising a gasket for inclusion between the lid (22) and its extensions (24)in the one hand and the body of the trunking and adjacent lids on the other.

## Patentansprüche

1. Kabelkanalhalterung umfassend einen offenen Anschluss (10) mit einer flachen Basis (13) und senkrechten Seiten (11, 12), die sich zwischen mindestens zwei im Allgemeinen rechteckförmigen Öffnungen erstrecken, die durch die Abschlusskanten der flachen Basis (13) und senkrechten Seiten (11, 12) definiert sind, wobei die Öffnungen in gegenseitig geneigten Ebenen liegen, wobei die senkrechten Seiten (11, 12), die zusammen mit der Basis (13) die mindestens zwei Öffnungen, die nicht parallel zueinander liegen, definieren, und einen Deckel (22), der angepasst ist, den Anschluss (10) zu schließen und **dadurch gekennzeichnet, dass** der Deckel (22) angepasst ist, sich über die im Allgemeinen rechteckförmigen Öffnungen hinaus zu erstrecken.

2. Halterung gemäß Anspruch 1, wobei der Deckel (22) eine Feinpassung ist.

3. Halterung gemäß Anspruch 2, wobei der Deckel (22) eine Steck- oder Einrastpassung ist oder am Platz gehalten wird durch ein Merkmal wie einen Überstand oder eine Klammer an seiner Innenfläche.

4. Halterung gemäß Anspruch 2 oder 3, wobei der Deckel einen sich am Umfang nach unten erstreckenden Flansch entlang derjenigen Seiten aufweist, die den senkrechten Seiten (11, 12) der Halterung entsprechen.

5. Halterung gemäß einem der vorhergehenden Ansprüche, wobei die Ansatzstücke (24) des Deckels (22) über die zwei oder mehr Öffnungen hinaus etwas oberhalb der Ebene des Deckels (22) selbst gebildet sind.

6. Halterung gemäß Anspruch 5, wobei die Ansatzstücke (24) des Deckels (22) etwas weiter ausgebildet sind als die Öffnungen.

7. Halterung gemäß einem der vorhergehenden Ansprüche, wobei beliebige Übergänge zwischen der Hauptebene des Deckels (22) und der Deckelansatzstücke (24) gleichmäßige Übergänge sind.

8. Halterung gemäß einem der vorhergehenden Ansprüche, wobei der Deckel (22) aus einem einzelnen Materialstück gebildet ist.

9. Halterung gemäß einem der vorhergehenden Ansprüche, wobei sowohl der Körper der Anschlusshalterung (10) und der Deckel (22) aus Metall gebildet sind.

10. Halterung gemäß einem der vorhergehenden Ansprüche, weiterhin umfassend eine Dichtung zur Aufnahme zwischen dem Deckel (22) und seinen Ansatzstücken (24) einerseits und dem Körper des Kabelkanals und angrenzenden Deckeln andererseits.

## Revendications

1. Raccord d'agrégation comprenant un connecteur ouvert (10) ayant une base plate (13) et des côté relevés (11, 12) s'étendant entre au moins deux ouvertures globalement rectangulaires, définies par les bords d'extrémité de ladite base plate (13) et desdits côtés relevés (11, 12), dans lequel lesdites ouvertures se trouvent dans des plans mutuellement inclinés, les côtés relevés (11, 12) qui définissent avec la base (13) lesdites ouvertures au nombre d'au moins deux n'étant pas parallèles entre eux, et un couvercle (22) adapté pour fermer le connecteur (10), et **caractérisé en ce que** ledit couvercle (22) est adapté pour s'étendre au-delà des ouvertures globalement rectangulaires.

2. Raccord selon la revendication 1, dans lequel le couvercle (22) est un ajustement sans jeu.

3. Raccord selon la revendication 2, dans lequel le couvercle (22) est un ajustement pressé ou clipsé ou est tenu en place par un élément tel qu'une saillie ou un clip sur sa face intérieure.

4. Raccord selon la revendication 2 ou 3, dans lequel le couvercle a une bride périphérique s'étendant vers le bas le long des côtés qui correspondent aux côtés relevés (11, 12) du raccord.

5. Raccord selon l'une quelconque des revendications précédentes, dans lequel les extensions (24) du couvercle (22) au-delà des deux ouvertures ou plus sont formées un peu au-dessus du plan du couvercle (22) lui-même.

6. Raccord selon la revendication 5, dans lequel les extensions (24) du couvercle (22) sont formées un peu plus larges que les ouvertures.

7. Raccord selon l'une quelconque des revendications précédentes, dans lequel toute transition entre le plan principal du couvercle (22) et les extensions (24) du couvercle est une transition douce.

8. Raccord selon l'une quelconque des revendications précédentes, dans lequel le couvercle (22) est formé d'un seul morceau de matière.

9. Raccord selon l'une quelconque des revendications précédentes, dans lequel le corps du raccord de connexion (10) et le couvercle (22) sont formés en métal.

10. Raccord selon l'une quelconque des revendications précédentes, comprenant de plus un joint destiné à être inséré entre le couvercle (22) et ses extensions (24) d'une part et le corps du raccord et des couvercles adjacents d'autre part.
